(19) Europäisches Patentamt
European Patent Office
Office européen des brevets

(11) **EP 3 134 480 B1**

(12) **EUROPEAN PATENT SPECIFICATION**

(45) Date of publication and mention
of the grant of the patent:
**13.06.2018 Bulletin 2018/24**

(51) Int Cl.:
***C09D 5/00*** *(2006.01)*

(21) Application number: **15712259.9**

(22) Date of filing: **25.03.2015**

(86) International application number:
**PCT/EP2015/000641**

(87) International publication number:
**WO 2015/161912 (29.10.2015 Gazette 2015/43)**

(54) **BLACK PIGMENT COMPOSITION FOR HEAT-SHIELDING COATING, USE OF SAME, HEAT-SHIELDING COATING USING SAME AND USE OF SAME FOR SHADING AND COATING**

SCHWARZE PIGMENTZUSAMMENSETZUNG FÜR HITZEABSCHIRMUNGSBESCHICHTUNG, IHRE VERWENDUNG, HITZEABSCHIRMUNGSBESCHICHTUNG DAMIT UND VERWENDUNG DAVON ZUR ABSCHIRMUNG UND BESCHICHTUNG

COMPOSITION DE PIGMENT NOIR POUR REVÊTEMENT DE PROTECTION THERMIQUE, UTILISATION ASSOCIÉE, REVÊTEMENT DE PROTECTION THERMIQUE UTILISANT CELLE-CI ET UTILISATION ASSOCIÉE POUR L'OMBRAGE ET LE REVÊTEMENT

(84) Designated Contracting States:
**CH DE LI**

(30) Priority: **25.04.2014 JP 2014091128**

(43) Date of publication of application:
**01.03.2017 Bulletin 2017/09**

(73) Proprietor: **Clariant International Ltd
4132 Muttenz (CH)**

(72) Inventors:
• **KITAO, Shinsuke
Kakegawa-City
Shizuoka-pref. 436-0026 (JP)**

• **NATORI, Hikaru
Fukuroi city
Shizuoka pref. 437-0040 (JP)**

(74) Representative: **Hütter, Klaus
Clariant Produkte (Deutschland) GmbH
Patent Management
Industriepark Höchst, G 860
65926 Frankfurt am Main (DE)**

(56) References cited:
**WO-A2-2005/007758     WO-A2-2014/067613
JP-A- 2000 072 990**

**Description**

BACKGROUND OF THE INVENTION

1. Field of the Invention

The present invention relates to a black pigment composition for heat-shielding coatings.

2. Description of the Related Art

During the summer, heat generated by sunlight radiated onto the roofs and outer walls of buildings and paved streets accumulates. Due to this, cooling load increases during the day and the heat is released during the night, which causes a phenomenon known as the heat island phenomenon, in which ambient temperature does not fall even after sundown in urban areas, and is becoming a serious problem.

One example of a method used to relieve this heat island phenomenon consists in applying, to building roofs, outer walls and the like, a coating to which infrared reflection and thus, heat shielding properties are imparted, thereby not allowing sunlight energy to accumulate inside the buildings by causing it to be reflected from the roofs and outer walls thereof, and development of such a method is currently actively proceeding at many companies.

From the viewpoint of shielding from heat, a white coating obtained by dispersing a white pigment, which does not absorb light of a wavelength from the visible region to the infrared region, in a resin and a solvent typically demonstrates the highest reflection of light and considerable heat-shielding effects. However, when a white coating is applied to building outer walls, warehouse roofs and the like, it is extremely glaring due to its high reflectance, and this may make it unpleasant for nearby residents and result in troubles. Although a method consisting in lowering brightness by adding carbon black to the coatings has been considered as means for reducing such glaringness, a further problem occurs in that heat-shielding effects decrease due to absorption of radiation in the infrared wavelength region by the carbon black pigment.

In response to such needs, as indicated in the prior art in Japanese Patent Application Publication No. 2000-72990, for example, a coating produced by combining green chromium oxide ($Cr_2O_3$) with a red pigment (such as iron oxide), which is the complementary color thereof, has been frequently used as a black coating. The reasons for this are that, this pigment has high infrared radiation reflectance and is preferable for shielding from heat, has superior durability in terms of weather resistance and chemical stability, and is comparatively inexpensive. Consequently, amidst the growing awareness of global warming in recent years, chromium-based heat-shielding coatings are being widely used among the many materials competing in the market.

With respect to the roofs of buildings in particular, which have a large surface area exposed to sunlight and greatly contribute to rises in temperature inside buildings, roof members are frequently used that have been coated using a method referred to as PCM that consists in preliminarily coating a steel sheet followed by cutting to a desired shape. In such an application, chromium-based pigments are most commonly used on the Japanese market as black pigments for heat-shielding coatings.

On the other hand, there is a strong demand throughout the coating industry for an alternative to chromium pigments that does not contain the trivalent chromium from $Cr_2O_3$, based on enhanced safety awareness, and there is a growing need to eliminate the use of chromium in the field of heat-shielding coatings as well. The major requirements for black pigment compositions for heat-shielding coatings that use such non-chromium-based pigments are mentioned below.

1) The composition must be able to produce a black color that approximates black coatings obtained with chromium-based pigments under dark color conditions as specified by Munsell N-1.
2) The coating hue in a light color which approximately corresponds to Munsell N-6 must approach that of chromium-based heat-shielding black coatings. As a result, when shading to an intermediate color by diluting a dark-colored pigment, shading will be possible in the same manner as, or analogously to, where chromium-based pigments are used.
3) The composition must have favorable weather resistance and durability, and must be inexpensive.

The reasons for the need for a pigment composition able to satisfy both the requirements 1) and 2) above are as mentioned below. Namely, in the case where the hue of a coating color that uses an alternative pigment to a conventional chromium-based pigment differs from that of the latter, the method and procedure used for shading also differ, and as a result thereof, it becomes necessary to carry out bothersome work when applying the coating on site. In addition, there is also increased likelihood of the occurrence of troubles caused by the hue of a coated article differing from the hue specified by a customer. If the hue of a coating color that uses an alternative pigment resembles that of a conventional chromium-based pigment, decreases in workability and the occurrence of problems relating to quality as previously described can be prevented.

Among the requirements 1) to 3) above, regarding the requirement 1), a composition can be made to approach a black color comparatively easily by combining chromatic inorganic or organic pigments having a mutually complementary relationship and also by using an increased concentration. However, pigment compositions have heretofore been unknown that are also able to satisfy the requirement 2) in combination with, e.g., a white pigment, and further the requirement 3).

Chromium alternatives include non-chromium-based calcined pigments known to have high durability. Like chromium-based pigments, these pigments are also black, and further reportedly have high infrared radiation reflectance. However, such pigments which are chromium-free and imparted with said properties frequently use rare metals in the place of chromium, thereby making them extremely expensive and unsuitable for use as an alternative pigment.

In Japanese Patent Application No. 2012-243477 (an application filed by the present inventors, WO 2014/067613), the present inventors proposed a novel black pigment composition for heat-shielding coatings that approximates carbon black, and in this case, a hue that approximates carbon black in a dark color is able to be provided. However, optimum conditions for obtaining a pigment composition able to approximate the hue of a light-colored chromium-based black coating, as described in 2), above have not been found. Furthermore, international publication WO 2005/7758 describes pigment compositions for paints containing phtalosyanine blue pigment, phthalocyanine green pigment and the like.

As has been previously described, there is a strong demand for a non-chromium-based, heat-shielding black coating that demonstrates favorable weather resistance and durability, is inexpensive, and approximates the hue produced by chromium-based pigments, from customers who have conventionally used heat-shielding black coatings using chromium-based pigments. However, for reasons such as weather resistance, price or others, a coating that satisfies such a level of required performance has not yet been realized with a chromium pigment alternative.

SUMMARY OF THE INVENTION

An object of the present invention is to provide a black pigment composition for heat-shielding coatings that has superior infrared radiation transmittance, approximates the hue of chromium-based black heat-shielding coatings not only in a dark color, but also in a light color as well, thereby facilitating hue adjustment when mixed with a chromatic coating, has superior weather resistance and is also advantageous in terms of cost, as well as a heat-shielding coating that uses the same, and the use thereof for shading and coating.

As a result of conducting extensive research to resolve the drawbacks of the related art in consideration of these circumstances, the present inventors obtained the following guidelines for achieving the object of the present invention.

(1) Target Hue
For the hue (target hue) of a novel black coating to take the place of chromium pigment-based black heat-shielding coatings used on the market, the target is a hue that approximates that of chromium-based black coatings in both a dark color and a light color. Since the hue of chromium-based pigments that have been light-colored in particular has a somewhat bluish tint instead of simply a gray color, a hue defined by $L_1^* = 54.70$, $a_1^* = -5.07$ and $b_1^* = -10.10$ has been determined to be preferable as the target hue.

(2) Instead of combining the conventional typical primary colors of yellow, magenta and cyan as chromatic pigments for obtaining the hue described in (1) above, the use of a combination of phthalocyanine blue and phthalocyanine green pigments as essential elements allows the obtaining of extremely favorable weather resistance for chromatic pigments.

(3) In order to achieve the object of (1) above, it is necessary to adjust the respective amounts of phthalocyanine blue and phthalocyanine green pigments so as to be in a specific relationship, based on the total amount of the chromatic pigment composition for heat-shielding coatings.

(4) It is difficult to approximate a black hue simply by combining the two components, phthalocyanine blue and phthalocyanine green pigments. In order to reduce the difference (color difference) from the hue of a light-colored chromium-based system, it is necessary to add further chromatic pigments as third and, if necessary, forth components and so on at a specific ratio.

On the basis of the above-mentioned guidelines, the present inventors sought a pigment composition that is able to approximate the above-mentioned target hue of a chromium-based coating in both a dark color and a light color while also having favorable weather resistance, and have completed the present invention.

Accordingly, the present invention relates to:

1. A black pigment composition for heat-shielding coatings, comprising, at least, a phthalocyanine blue pigment as a first pigment and a phthalocyanine green pigment as a second pigment, and further comprising at least one other chromatic pigment which selectively absorb light of 400 nm to 550 nm, and show transmittance in the infrared wavelength region of 40 % or more,_wherein, regarding the amounts in parts by weight of the phthalocyanine blue pigment as Mb, of the phthalocyanine green pigment as Mg, and of the total of the at least one other chromatic pigment as Mn,

$$1.5 < Mg/Mb < 4.0,$$

and

$$2 < Mb < 20$$

$$17 < Mg < 40$$

$$45 < Mn < 63,$$

are established.

2. A black pigment composition for heat-shielding coatings as set forth in 1 above, wherein at least one pigment selected from the group consisting of C.I. Pigment Blue 15:3, Pigment Blue 15:1, Pigment Blue 15:2, Pigment Blue 15:4 and Pigment Blue 15:6 is used as the phthalocyanine blue pigment.

3. A black pigment composition for heat-shielding coatings as set forth in 1 or 2 above, wherein C.I. Pigment Green 7 and/or C.I. Pigment Green 36 are/is used as the phthalocyanine green pigment.

4. A black pigment composition for heat-shielding coatings as set forth in any one of 1 to 3 above, wherein the composition consists of a phthalocyanine blue pigment as the first pigment, a phthalocyanine green pigment as the second pigment, and third and fourth pigments as the at least one other chromatic pigment.

5. A black pigment composition for heat-shielding coatings as set forth in 4 above, wherein the third pigment is an inorganic yellow pigment.

6. A black pigment composition for heat-shielding coatings as set forth in 5 above, wherein the inorganic yellow pigment is at least one pigment selected from the group consisting of yellow iron oxide, zinc sulfide, cadmium yellow, bismuth vanadium yellow, vanadium tin yellow, and vanadium zirconia yellow.

7. A black pigment composition for heat-shielding coatings as set forth in any one of 4 to 6 above, wherein the fourth pigment is at least one pigment selected from the group consisting of a diketopyrrolopyrrole pigment and a naphthol pigment.

8. A black pigment composition for heat-shielding coatings as set forth in any one of 1 to 7 above, wherein the composition has a hue within the range of color difference $\Delta E_2$ of 2.0 or less, as calculated by the equation $\Delta E_2 = [(\Delta L_2{}^*)^2 + (\Delta a_2{}^*)^2 + (\Delta b_2{}^*)^2]^{1/2}$, relative to the target hue of $L_2{}^* = 26.80$, $a_2{}^* = 0.22$, $b_2{}^* = 0.42$, in the color space coordinate according the CIE standard.

9. Use of a black pigment composition for heat-shielding coatings as set forth in any one of 1 to 8 above, for producing a hue when the composition is light-colored, within the range of color difference $\Delta E_1$ of 2.0 or less, as calculated by the equation $\Delta E_1 = [(\Delta L_1{}^*)^2 + (\Delta a_1{}^*)^2 + (\Delta b_1{}^*)^2]^{1/2}$, relative to the target hue of $L_1{}^* = 54.70$, $a_1{}^* = -5.07$, $b_1{}^* = -10.10$, in the color space coordinate according the CIE standard.

10. A heat-shielding black coating comprising, at least, a black pigment composition for heat-shielding coatings according to any one of 1 to 8 above, a binder, and a solvent.

11. A heat-shielding black coating as set forth in 10 above, wherein the coating further comprises a white inorganic pigment.

12. A heat-shielding black coating as set forth in 11 above, wherein the white inorganic pigment is a white pigment selected from the group consisting of titanium oxide, zinc oxide and aluminum oxide.

13. A heat-shielding black coating as set forth in any one of 10 to 12 above, wherein the binder is a resin selected from the group consisting of an acrylic resin, an acrylic-silicone resin, a silicone resin, a fluororesin, a urethane resin, an unsaturated polyester resin and an alkyd resin.

14. Use of a heat-shielding black coating as set forth in 10 to 13 above, for shading chromatic or achromatic coatings.

15. Use of a heat-shielding black coating as set forth in 10 to 13 above, for coating a roof or outer wall of a building.

According to the present invention, a black pigment composition for heat-shielding coatings can be obtained, which shows solar heat shielding effects, has superior weather resistance, is able to be used as an alternative to chromium-based pigments conventionally used as pigments for heat-shielding coatings because it approximates the hue of chromium-based black pigments under both highly-dark colored black color and light-colored conditions, facilitates shading of coatings to an intermediate color and the like, and is advantageous in terms of cost.

DESCRIPTION OF THE PREFERRED EMBODIMENTS

Accordingly, the present invention provides a pigment composition for heat-shielding coatings, which shows high optical transmittance in the near infrared region and superior weather resistance, has a hue which approximates that of chromium-based black pigments, comprises as essential pigments phthalocyanine blue and phthalocyanine green, and further comprises at least one chromatic pigment mixed therein, as well as the use thereof, a heat-shielding coating using the same and the use thereof for shading and coating.

Since the formulation of conventionally used chromium-based black pigments varies according to such factors as the composition of pigments used (such as chromium dioxide or iron oxide) or the production method, black coatings in which they are used also vary slightly regarding their color tone. As was previously described, various chromium-based black pigments were investigated during the course arriving at the present invention, and the values shown in Table 1 were determined as the target hues which would have the highest universality, based on those results along with the opinions of experts in the coating industry.

Table 1

|  | Hue | L* | a* | b* |
|---|---|---|---|---|
| Light color standard sample | 1 | 54.70 | -5.07 | -10.10 |
| Dark color standard sample | 2 | 26.80 | 0.22 | 0.42 |

In the present invention, dark color refers to a color having low brightness (low L* value) in the Munsell color system and a hue that approximates Munsell N-1. In addition, although light color refers to a color having higher brightness and a higher L* value, it has a somewhat bluish-gray color as can be understood from the values of a* and b* in Table 1.

Color difference ($\Delta E$) in the present invention represents a difference in hue between a standard sample and a coated sample, is typically shown as the spatial distance between the two in an L*a*b* chromaticity spatial diagram, and is a value calculated by $\Delta E = [(\Delta L^*)^2+(\Delta a^*)^2+(\Delta b)^2]^{1/2}$. In general, if $\Delta E$ is 2.0 or less, it is said that recognition of the color difference between two objects by the human eye becomes difficult. Consequently, in the present invention, although the target to be attained in the light color region is $L_1^* = 54.70$, $a_1^* = -5.07$, $b_1^* = -10.10$, a range of hue in the neighborhood of the target in which the color difference $\Delta E$ from that target is 2.0 or less was decided to be the target hue. Similarly, with respect to the dark color region, a range of hue in the neighborhood of the target $L_2^* = 26.80$, $a_2^* = 0.22$, $b_2^* = 0.42$ in which the color difference $\Delta E$ from that target is 2.0 or less was decided to be the target hue.

The heat-shielding black coating according to the present invention is a coating based on a pigment composition comprising phthalocyanine blue and phthalocyanine green as essential chromatic pigments and further comprising a chromatic pigment or chromatic pigments of another hue. Combining this plurality of chromatic pigments allows the obtaining of a heat-shielding coating, which can express a black color close to that of black chromium-based pigments and has high weather resistance.

Both phthalocyanine blue and phthalocyanine green pigments used in the present invention have a chemical structure having a metal-containing phthalocyanine backbone, and are known to be pigments which have high weather resistance as a result of exhibiting superior overall performance, such as photostability, heat resistance and chemical resistance to acids or bases, and the like.

In contrast to phthalocyanine blue pigments having their maximum transmittance in the vicinity of 470 nm, phthalocyanine green pigments have maximum transmittance in the vicinity of 500 nm and also comparatively high absorbance in the vicinity of 400 nm. Thus, by mixing phthalocyanine blue and phthalocyanine green, the phthalocyanine green can serve to partially assume the function of a yellow pigment in the YMC color-subtraction method.

Typical yellow pigments have inferior weather resistance in comparison with phthalocyanine blue and phthalocyanine green. Therefore, when they are subjected to an exposure test in the form of pigment compositions, there is tendency that only the yellow pigment will fade, the black color or gray color will not be maintained after the weather resistance test, and bluish or greenish discoloration will occur. By using phthalocyanine pigments having high weather resistance according to the present invention, it becomes possible to reduce the proportion of a yellow pigment having poor weather resistance and thus improve the weather resistance of a pigment composition, but, in order to achieve a black color, it is necessary to further mix in a third, fourth or yet further chromatic pigments.

In the case of combining and mixing phthalocyanine blue and phthalocyanine green pigments with a third pigment, an examination is carried out based on the approaches indicated below, for example.

(1) Enhancing weather resistance.

For the third component pigment to be added to and combined with phthalocyanine blue and phthalocyanine green pigments, it is necessary to select a pigment having high heat and weather resistance. Regarding the heat resistance, a pigment having a high thermal decomposition temperature is preferred.

(2) Select a chromatic pigment which allows approximation of the hue to that of chromium-based black pigments ($\Delta E$ value in the dark color region and light color region of 2.0 or less).

Search for a pigment type having an absorption spectrum so as to approximate an achromatic color in subtractive color mixing on the chromaticity diagram and so as to reduce the color difference from black chromium-based black pigments.

(3) Based on the data obtained from (1) and (2) above, select a preferable third pigment type and determine a ratio of that chromatic pigment such that a color difference $\Delta E$ in the light color region of 2.0 or less is achieved:

(4) If it is difficult to realize a desired performance using only the above-mentioned three types of pigments, further select and mix in a fourth pigment and, if necessary, further pigments in consideration of the results of the studies of (1) and (2) above etc., and approximate the visible light absorption properties of the pigment composition to those of chromium-based black pigments.

(5) Carry out a weather resistance test on the resulting candidate formulation, and determine a preferable amount range for each chromatic pigment in terms of weather resistance.

The present invention was completed by going through the examination process of (1) to (5) above, and it has been found that, when attempting to achieve high infrared radiation transmittance and good weather resistance and to obtain a hue which approximates that of black chromium-based pigments, the respective amounts in parts by weight of phthalocyanine blue pigments, phthalocyanine green pigments and other chromatic pigments are required to be in a specific relationship, thereby arriving at the present invention.

Examples of the phthalocyanine blue pigment used in the present invention include C.I. Pigment Blue 15:3, Pigment Blue 15:1, Pigment Blue 15:2, Pigment Blue 15:4 and Pigment Blue 15:6.

Examples of the phthalocyanine green pigment used in the present invention include C.I. Pigment Green 7 and C.I. Pigment Green 36.

According to the present invention, although phthalocyanine blue and phthalocyanine green are required to be present as essential pigments, such a requirement is not indispensable only in order to simply obtain a black coating. For example, if a red pigment is mixed into phthalocyanine green, a black color can be obtained based on the complementary color relationship thereof, without adding a blue pigment. However, the present inventors have found that, when an attempt is made to improve weather resistance under light color conditions, it is difficult to achieve it only by mixing these two components, and it is particularly preferable to add phthalocyanine blue for that purpose.

It is presumed that the reason for this is that, when a two component system of a green pigment and a red pigment is exposed to sunlight and the red pigment then fades, only the green pigment remains. This means that decomposition of even only a portion of the red pigment leads to remarkably conspicuous discoloration. In contrast, it is inferred that, when both phthalocyanine blue and phthalocyanine green are present, broad absorption of visible light occurs due to these two pigment components having different absorption spectra, and as a result of reduced chroma compared to the green pigment alone, generation of color is suppressed even if the red pigment fades.

In order to achieve the object of the present invention, the amount in parts by weight Mb of the phthalocyanine blue pigment and the amount in parts by weight Mg of the phthalocyanine green pigment are required to satisfy the following conditions: $1.5 < Mg/Mb < 4.0$, preferably $1.7 < Mg/Mb < 3.8$ and particularly preferably $1.8 < Mg/Mb < 3.7$.

In the case where Mg/Mb is 1.5 or less, the amount of the phthalocyanine green pigment is small and due to this, as previously described, the above-mentioned visible light absorption width narrows, and fading becomes visually more conspicuous.

The reason for satisfying the relationship $Mg/Mb < 4.0$ is similar. That is, since the amount of the phthalocyanine blue is small, the visible light absorption width narrows and fading becomes visually more conspicuous.

As mentioned above, since phthalocyanine blue and phthalocyanine green pigments both have only a small light absorbance in the vicinity of 450 nm to 550 nm, it is difficult to express a hue which approximates that of chromium-based black pigments even by mixing these two pigments. Therefore, a third pigment and optionally, other pigment(s) such as fourth and further pigments, are mixed in.

Pigments which can be used as a third, fourth or further pigment according to the present invention are preferably pigments which selectively absorb light of 400 nm to 550 nm, and show transmittance in the infrared wavelength region of 40 % or more. Both inorganic and organic chromatic pigments can be used, provided they satisfy the above-mentioned requirements, but preference is given to pigments having weather resistance comparable to phthalocyanine blue and green considering hue changes after being exposed.

Commercially available inorganic chromatic pigments include oxide-based pigments such as cobalt blue, hydroxide-based pigments such as yellow iron oxide or viridian, sulfide-based pigments such as zinc sulfide, lithopone, cadmium yellow, vermillion or cadmium red, silicate-based pigments such as ultramarine, and vanadium-based pigments such as bismuth vanadium yellow, vanadium tin yellow or vanadium zirconia yellow, as well as ferrocyanides (Prussian blue) or phosphates (manganese violet). Any inorganic chromatic pigments among the above can be used, provided they have the above-mentioned optical properties.

Inorganic chromatic pigments are suitable for use in baking coatings and the like since they typically have better weather resistance, heat resistance, hiding power etc., in comparison with organic pigments. However, they have low coloring strength. In addition, they are susceptible to acids and bases, and therefore may not be said to be always suitable chromatic pigments for outdoor applications subjected to strong attack by wind, rain and sunlight. Among these, vanadium-based pigments are, however, particularly preferable as chromatic pigments for the present invention in terms of their high coloring strength, low toxicity and high weather resistance.

Examples of inorganic chromatic pigments used in the present invention include, for example, C.I. Pigment Yellow 184 (bismuth vanadate pigment) and Pigment Yellow 42. Particular preference among these is given to C.I. Pigment Yellow 184, which has the chemical formula $4BiVO_4 \cdot 3Bi_2MoO_6$ and is particularly preferred when applying a heat-shielding layer onto an iron plate etc., by bake-coating because it has high heat resistance and weather resistance.

Examples of organic pigments include, for example, azo pigments, lake pigments, thioindigo pigments, anthraquinone pigments (such as anthanthrone pigments, diaminoanthraquinonyl pigments, indanthrone pigments, flavanthrone pigments or anthrapyrimidine pigments), perylene pigments, perinone pigments, diketopyrrolopyrrole pigments, dioxazine pigments, phthalocyanine pigments, quinophthalone pigments, quinacridone pigments, isoindoline pigments and isoindolinone pigments. Of these pigments, those having a reddish or yellowish hue and the like are suitably selected.

If an inorganic yellow pigment such as C.I. Pigment Yellow 184 is used as a third pigment, it is particularly preferable to add a red pigment, for example, a diketopyrrolopyrrole pigment such as C.I. Pigment Red 254 or a naphthol pigment such as C.I. Pigment Red 170 as a fourth pigment in order for the hue to be close to that of chromium-based black pigments.

Based on 100 parts by weight of the black pigment composition, the composition of the phthalocyanine blue (Mb), the phthalocyanine green (Mg) and the at least one other chromatic pigment (Mn), for example the total (M34) of a third pigment (M3), such as an inorganic yellow pigment, and a fourth pigment (M4), such as a diketopyrrolopyrrole pigment and/or a naphthol pigment satisfies the following relational expressions:

$$2 < Mb < 20$$

$$17 < Mg < 40,$$

and

$$45 < Mn(M34) < 63,$$

preferably:

$$7 < Mb < 18,$$

$$25 < Mg < 38,$$

and

$$50 < Mn(M34) < 62,$$

and and particularly preferably:

$$6 < Mb < 16,$$

$$28 < Mg < 38,$$

and

$$52 < Mn(M34) < 61.$$

It is not preferable that the lower limit or upper limit of each relational expression of $2 < Mb < 20$, $17 < Mg < 40$ and $45 < Mn(M34) < 63$ is exceeded, because the color difference from chromium-based pigments then increases.

A white pigment can be added to the heat-shielding coating of the present invention in addition to chromatic pigments such as phthalocyanine blue and phthalocyanine green pigments. Since a coating, which has been preliminarily adjusted in respect to the brightness to be possessed by the applied coating color, can be prepared by adding a white pigment to a coating which comprises the dark-colored, black pigment composition, the shading operation for other chromatic coatings can be simplified. Examples of such white pigments used include metal oxides such as rutile titanium dioxide, aluminum oxide and zinc oxide, but particular preference is given to titanium dioxide due to its high refractive index and high degree of whiteness.

The formula of the pigment composition of the present invention can be searched for and determined based on the above-mentioned guidelines and can be prepared using a method like that indicated below. For example, the pigment composition according to the present invention can be prepared by uniformly mixing the aforementioned individual chromatic pigments, which have been dried and ground separately, in a predetermined weight ratio based on the above-mentioned guidelines so as to approximate the black color of chromium-based pigments. In addition, in order to further enhance the color separation resistance and color development of the colored resin of the coating, if necessary, it is also preferable to mix aqueous slurries of at least two chromatic pigments, followed by stirring, filtering, washing, and then drying and grinding.

In the above-mentioned preparation method, a surfactant may be used in combination when preparing an aqueous dispersion of a chromatic pigment. Examples of surfactants include, for example, anionic surfactants, nonionic surfactants and cationic surfactants.

Examples of anionic surfactants include, for example, sodium dodecyl benzene sulfonate, sodium dialkyl sulfosuccinate and sodium polyoxyethylene alkyl ether sulfate.

Examples of nonionic surfactants include, for example, polyoxyethylene lauryl ethers, polyoxyethylene nonyl phenyl ethers and sorbitan fatty acid esters.

Examples of cationic surfactants include, for example, stearyl trimethyl ammonium chloride and distearyl dimethyl ammonium chloride.

In the above-mentioned preparation method, the amount of surfactant used in combination is normally 10 parts by weight or less and preferably within the range of 3 parts by weight to 10 parts by weight, relative to 100 parts by weight of the chromatic pigment. An amount of surfactant used of greater than 10 parts by weight is not preferable, because, in this case, there is a tendency that increased formation of blisters may occur when a coating film is formed.

A coloured resin dispersion is obtained by dispersing the pigment composition of the present invention in a dispersion medium using a known disperser. As such a dispersion medium, use is made of a mixture of a binder resin and a solvent. Any resin can be used, and examples of resins used include, for example, synthetic resins such as alkyd resins, acrylic resins, silicone resins, acrylic-silicone resins, urethane resins, polyester resins, amide resins, melamine resins, ether resins, fluororesins, polyvinyl chloride, poly(meth)acrylates, polystyrenes, ABS resins, AS resins, polyolefins such as polyethylene or polypropylene, polyamides, polyacetals, polycarbonates, polyesters such as PET or PBT, and modified polyphenylene ethers. Among these, acrylic-silicone resins and silicone resin are particularly preferable in terms of weather resistance.

Examples of solvents used as pigment dispersion media include, for example, water, aromatic hydrocarbon solvents such as toluene or xylene, aliphatic hydrocarbon solvents such as mineral spirits, alcohol solvents such as methanol or ethanol, ester solvents such as ethyl acetate, ketone solvents such as methyl ethyl ketone, and ether solvents such as ethylene glycol.

The proportion of the pigment composition of the present invention in a dispersion obtained by dispersing the pigment composition is normally preferably 90 % by weight or less and particularly preferably within the range of 0.01 % by weight to 50 % by weight. The remainder consists of dispersion medium and additives etc.

In addition, various types of assistants and stabilizers may also be used if necessary, examples of which include dispersion wetting agents, anti-skinning agents, ultraviolet absorbers, and antioxidants.

Dispersion conditions for dispersing the pigment composition in the aforementioned dispersion medium vary depending on the dispersion medium and disperser, and the dispersing temperature may generally range from room temperature to 240 °C and preferably from room temperature to 150 °C, and the dispersing time may be generally 120 hours or shorter and preferably 5 hours or shorter.

Any disperser can be used to disperse the pigment composition of the present invention in the aforementioned dispersion media, and examples thereof include known dispersers such as disper mixers, homomixers, bead mills, ball mills, two-roll mills, three-roll mills or pressure kneaders.

If necessary, such a dispersion of the pigment composition of the present invention is mixed with other additives and the like to prepare a final coating. The coating can be used in a bilayer system by first forming an underlayer from a coating comprising, as a starting material, a pigment having high infrared radiation reflectance, and then applying a top layer thereon from a coating having high infrared radiation transmission, which is made of the product according to the present invention, either directly in the form of a dark-colored coating or after the coating is color-lightened by mixing it with a coating having a different hue. If the coating is used after being color-lightened by mixing it with titanium oxide or the like having high infrared radiation reflectance, it is possible to use the coating in a monolayer system, in addition to the multilayer system as mentioned above.

The heat-shielding black coating according to the present invention is preferable in terms of improving the efficiency of a shading operation in the case where it is mixed with a coating having a different hue for shading the latter. Furthermore, it can also be preferably used for applications in which it is applied with the same color tone to a substrate without mixing. When shading is carried out, a dark-colored black coating prepared using the pigment composition of the present invention and a coating having a different hue, such as a white pigment, are mixed at such a predetermined ratio that a desired color tone is achieved, and then applied.

A shading method which uses a computer is also useful for obtaining a desired color tone using the heat-shielding black coating of the present invention. It is a system to determine a mixing ratio of coatings for achieving a desired color tone (target) by preliminarily registering the coordinate data in CIE color space of the heat-shielding black coating of the present invention in a computer, and carrying out computer calculations in combination with the color coordinate data of other primary color coatings and the like, and enables accurate shading without requiring skilled work. Since the black coating prepared using the pigment composition of the present invention has a hue close to that of conventional chromium-based black coatings under both dark and light color conditions, an effect thereof is that it makes it possible to design a shading operation system in a simpler manner because shading is possible while utilizing the knowledge from conventional chromium-based systems, without color corrections based on complicated computer calculations.

The heat-shielding black coating obtained according to the above-mentioned method can be applied on a desired substrate after being mixed with other chromatic coatings such as red or blue, or a white coating, and the like. Substrates made of various materials are used depending on the purpose in each case, regardless whether they are reflective or non-reflective, including roofs such as zinc, slate and tile roofs, mortar walls, steel tanks and asphalt streets. In addition, any conventional undercoatings or application methods can be suitably used for coating operations.

Among the above-mentioned various types of materials, a metal plate is preferable as a substrate of the black heat-shielding coating of the present invention since it increases infrared radiation reflectance. Although stainless steel plates have been conventionally used as an example thereof, aluminum-zinc alloy-coated steel plates commonly referred to as galvalume plates, which have recently come to be widely used as roof materials, are particularly preferable due to their superior durability and infrared radiation reflectance. In the case of such light-reflecting substrates, high heat shielding performance can be obtained even when using the coating of the present invention as a single layer without using a white light-diffusing pigment such as titanium dioxide.

EXAMPLES

The present invention will be further described based on examples. In the examples, the terms "parts" and "%" represent "parts by weight" and "% by weight", respectively. Furthermore, the resins used are alkyd resins Vialkyd AC 451n/70SNB and Vialkyd AC 451n/60X manufactured by Cytec Corp., and the hardener was a melamine resin Maprenal MF600/55BIB manufactured by Ineos Corp. The pigments and their trade names used in the examples and comparative examples are shown in Table 2.

Table 2

| Pigment Abbreviation | C.I. No. | Generic Name | Manufacturer | Trade Name |
|---|---|---|---|---|
| PB15:1 | C.I. Pigment Blue 15:1 | Phthalocyanine blue | Clariant | Hostaperm Blue A4R |
| PG7 | C.I. Pigment Green 7 | Phthalocyanine green | Clariant | Hostaperm Green GNX |
| PR254 | C.I. Pigment Red 254 | Diketopyrrolopyrrole pigment | Clariant | Hostaperm Red D3G70 |
| PY184 | C.I. Pigment Yellow 184 | Bismuth vanadate pigment | Clariant | Hostaperm Oxide Yellow BV01 |

Samples obtained in the following examples and comparative examples were evaluated according to the methods indicated below.

1) Measurement of Hue

Each test sheet or plate was prepared by applying a pigment composition to a black/white hiding paper or a metal plate, and the test sheet or plate was subjected to measurement using a spectrophotometer equipped with an original program PQC in accordance with DIN5033-7 and ISO7724-2 to obtain values for parameters such as $L^*$, $a^*$, $b^*$, color difference $\Delta E$ and chroma change $\Delta C$.

2) Evaluation of Weather Resistance

Each test plate was prepared by applying a pigment composition to a metal plate, and the coated metal plate was then subjected to an accelerated exposure test using a weatherometer (Model Ci4000 Weatherometer, Atlas Electric Devices Co.). Weather resistance was evaluated by measuring the color difference before and after the accelerated exposure test. Testing was carried out under exposure conditions in accordance with ISO4892-2 using a xenon lamp.

3) Measurement of Infrared Radiation Reflectance

Each test sheet was prepared by applying to white/black hiding paper a heat-shielding coating sample according to one of the following examples or comparative examples, and subjected to a measurement using a spectrophotometer (Model 750 Spectrophotometer, Lambda Corp.). (Evaluation was carried out by measuring the reflectance at the measurement sites, i.e., the coating applied to the white part of the white/black hiding paper and the coating applied to the black part.)

Example 1

The following four pigments were mixed in a weight ratio as indicated below to obtain Pigment Composition 1A.

(Pigment Composition 1A)

| C.I. Pigment Blue 15:1 (PB15:1) | 10 parts by weight (= Mb) |
| C.I. Pigment Green 7 (PG7) | 30 parts by weight (= Mg) |
| C.I. Pigment Yellow 184 (PY184) | 25 parts by weight (= M3) |
| C.I. Pigment Red 254 (PR254) | 35 parts by weight (= M4) |

In this case, Mg/Mb = 3.0.

10.0 parts by weight of Pigment Composition 1A were mixed with 24.0 parts by weight of a dispersing varnish P1 to prepare a mill base, which was then dispersed in a disperser (Model DAS200K, Lau GmbH) for 60 minutes to obtain Pigment Dispersion 1B.

66.0 parts by weight of a diluting varnish P2 were added to the resulting Pigment Dispersion 1B so that the pigment content was 10.0 %, followed by mixing in a disperser (Model DAS200K) for 5 minutes to obtain Coating 1C.

The composition of the dispersing varnish P1 consisted of 50 % by weight of Vialkyd AC 451n/70SNB and 50 % by weight of solvent naphtha, where the alkyd resin content was 35 % by weight. The composition of the diluting varnish P2 consisted of 26.4 % by weight of Vialkyd AC 451n/70SNB, 29.4 % by weight of Vialkyd AC 451n/60X, 35.8 % by weight of Maprenal MF600/55BIB, 6.2 % by weight of a high boiling solvent mixture, and 2.2 % by weight of solvent naphtha, where the alkyd resin content was 55.8 % by weight.

(Heat-Shielding Coated Samples)

1) Light-Colored Coated Sample 1E

6.0 parts by weight of Coating 1C were mixed with 20.0 parts by weight of a white coating ($TiO_2$ concentration: 30 %) to obtain Heat-Shielding Coating 1D. Heat-Shielding Coating 1D was then used to color a metal plate (iron) with a bar coater (No.8 Wet 100 $\mu$m), and after allowing to stand undisturbed for 20 minutes at room temperature while keeping the plate horizontal, the coated metal plate was heated and dried at 140 °C for 20 minutes to obtain Light-Colored Coated Sample 1E.

The composition of the white coating consisted of 30.0 parts by weight of $TiO_2$, 22.53 parts by weight of Vialkyd AC 451n/70SNB, 2.92 parts by weight of Bentone 38 (10 % in Xylol), 17.13 parts by weight of Vialkyd AC 451n/60X, 22.19 parts by weight of Maprenal MF600, 0.56 part by weight of Byk 331, 1.12 parts by weight of butyl diglycol, 1.24 parts by weight of depanol, 1.24 parts by weight of butanol, and 1.07 parts by weight of solvent naphtha.

2) Dark-Colored Coated Sample 1F

Dark-Colored Coated Sample 1F was prepared according to the same method as that used to prepare the light-colored sample with the exception of only using the above-mentioned Coating 1C and not adding a white coating in the above-mentioned process.

The samples 1E and 1F were subjected to measurement of hue, evaluation of weather resistance and measurement of infrared radiation reflectance in accordance with the methods described above. The results from the measurement of hue are shown in Table 3.

Comparative Example 1

The following four pigments were mixed in a weight ratio as indicated below to obtain Comparative Pigment Composition 1a.

(Comparative Pigment Composition 1a)

| C.I. Pigment Blue 15:1 (PB15:1) | 30 parts by weight (= Mb) |
| C.I. Pigment Green 7 (PG7) | 30 parts by weight (= Mg) |
| C.I. Pigment Yellow 184 (PY184) | 20 parts by weight (= M3) |
| C.I. Pigment Red 254 (PR254) | 20 parts by weight (= M4) |

In this case, Mg/Mb = 1.0.

With the exception of using Comparative Pigment Composition 1a, dark-colored and light-colored coated samples were prepared according to the same method as that used in Example 1 followed by evaluating using the same methods as Example 1, the results of which are shown in Table 3.

In Example 1, the color difference $\Delta E$ from the target hue for the light color, prior to exposure, was favorable at $\Delta E$ = 1.6, while that of Comparative Example 1 was poor at $\Delta E$ = 9.1.

In addition, infrared radiation reflectance of the dark-colored sample of Example 1 was 30 % or more while that of the light-colored sample was 55 % or more, and each satisfied the infrared radiation reflectance specification defined in the JPMS weatherable roof paint standards (2007) of the Japan Paint Manufacturers Association. Moreover, after having carried out a weather resistance test by exposing to a xenon lamp for 1500 hours, the color difference $\Delta E$ for the dark-colored sample before and after exposure was 0.66, thereby demonstrating a very little change, while the chroma change $\Delta C$ for the light-colored sample was small at 0.88, gray color was maintained visually and favorable weather resistance was demonstrated.

Table 3

| Parameter | | Example 1 | Comparative Example 1 | Target |
|---|---|---|---|---|
| Mb | | 10 | 30 | |
| Mg | | 30 | 30 | |
| M34 | | 60 | 40 | |
| Mg/Mb | | 3 | 1 | |
| Dark color hue | $L_2^*$ | 26.87 | 26.36 | 26.80 |
| | $a_2^*$ | 0.59 | -1.53 | 0.22 |
| | $b_2^*$ | 0.69 | -1.18 | 0.42 |
| Light color hue | $L_1^*$ | 54.81 | 54.97 | 54.70 |
| | $a_1^*$ | -3.59 | -12.83 | -5.07 |
| | $b_1^*$ | -9.58 | -14.83 | -10.10 |
| Color difference $\Delta E$ from target (before exposure test) | Dark color | 0.46 | 2.42 | |
| | Light color | 1.57 | 9.09 | |

Examples 2 and 3

The samples of Examples 2 and 3 were prepared according to the same method as Example 1 using the same types and combinations of achromatic pigments with the exception of changing only the pigment composition ratios to those shown in Table 4.

Comparative Examples 2 and 3

The samples of Comparative Examples 2 and 3 were prepared according to the same method as Example 1 using the same types and combinations of achromatic pigments with the exception of changing only the pigment composition ratios to those shown in Table 4.

The samples of Examples 2 and 3 and Comparative Examples 2 and 3 were evaluated in the same manner as Example 1, and the results are shown in Table 4.

As can be understood from the results, in contrast to Examples 2 and 3 demonstrating values for color difference $\Delta E$ of 2 or less with respect to the target hue for both the dark color and light color, the values for Comparative Examples 2 and 3 differed considerably from the target hue. The infrared radiation reflectance of Examples 2 and 3 having a color difference from the target of 2 or less both were favorable and satisfied the infrared radiation reflectance specification defined in the JPMS weatherable roof paint standards (2007) of the Japan Paint Manufacturers Association. Moreover, in a weather resistance test carried out by exposing to a xenon lamp (1500 hours), the values for color difference for the dark color before and after exposure were 0.75 (Example 2) and 0.51 (Example 3), while the values for chroma change $\Delta C^*$ for the light color were 1.07 (Example 2) and 0.95 (Example 3), thereby demonstrating extremely favorable durability.

As can be understood from the examples, it was determined that the black pigment composition for heat-shielding coatings according to the present invention and a coating using that pigment composition demonstrate advantageous effects that make it possible to produce a coated plate having a black hue similar to that of chromium-based black pigments, facilitate color matching such as shading when the coating is mixed with a coating of a different color, demonstrate high infrared radiation reflectance and superior weather resistance, and demonstrate superior so-called heat shielding.

Table 4

| | Mb | Mg | M3 (PY184) | M4 (PR254) | M34 | Mg/Mb | Dark Color | | | Light Color | | | Color difference ΔE from target (before exposure) | |
| | | | | | | | $L_2^*$ | $a_2^*$ | $b_2^*$ | $L_1^*$ | $a_1^*$ | $b_1^*$ | Dark color | Light color |
|---|---|---|---|---|---|---|---|---|---|---|---|---|---|---|
| Ex.2 | 10 | 35 | 25 | 30 | 55 | 3.5 | 26.89 | -0.16 | 0.42 | 55.50 | -6.69 | -9.51 | 0.39 | 1.90 |
| Ex.3 | 15 | 30 | 20 | 35 | 55 | 2 | 26.65 | 0.24 | 0.16 | 53.78 | -4.94 | -11.21 | 0.31 | 1.45 |
| Comp. Ex.2 | 8 | 42 | 25 | 25 | 50 | 5.25 | 27.04 | -0.87 | 0.27 | 56.46 | -10.16 | -8.72 | 1.13 | 5.56 |
| Comp Ex.3 | 25 | 30 | 10 | 35 | 45 | 1.2 | 26.04 | 0.06 | -0.49 | 52.63 | -6.36 | -13.74 | 1.20 | 4.38 |

**Claims**

1.  A black pigment composition for heat-shielding coatings, comprising, at least, a phthalocyanine blue pigment as a first pigment and a phthalocyanine green pigment as a second pigment, and further comprising at least one other chromatic pigment which selectively absorb light of 400 nm to 550 nm, and show transmittance in the infrared wavelength region of 40 % or more, wherein, regarding the amounts in parts by weight of the phthalocyanine blue pigment as Mb, of the phthalocyanine green pigment as Mg, and of the total of the at least one other chromatic pigment as Mn,

$$1.5 < Mg/Mb < 4.0,$$

and

$$2 < Mb < 20$$

$$17 < Mg < 40$$

$$45 < Mn < 63,$$

are established.

2.  A black pigment composition for heat-shielding coatings as claimed in claim 1, wherein at least one pigment selected from the group consisting of C.I. Pigment Blue 15:3, Pigment Blue 15:1, Pigment Blue 15:2, Pigment Blue 15:4 and Pigment Blue 15:6 is used as the phthalocyanine blue pigment.

3.  A black pigment composition for heat-shielding coatings as claimed in claim 1 or 2, wherein C.I. Pigment Green 7 and/or C.I. Pigment Green 36 are/is used as the phthalocyanine green pigment.

4.  A black pigment composition for heat-shielding coatings as claimed in any one of claims 1 to 3, wherein the composition consists of a phthalocyanine blue pigment as the first pigment, a phthalocyanine green pigment as the second pigment, and third and fourth pigments as the at least one other chromatic pigment.

5.  A black pigment composition for heat-shielding coatings as claimed in claim 4, wherein the third pigment is an inorganic yellow pigment.

6.  A black pigment composition for heat-shielding coatings as claimed in claim 5, wherein the inorganic yellow pigment is at least one pigment selected from the group consisting of yellow iron oxide, zinc sulfide, cadmium yellow, bismuth vanadium yellow, vanadium tin yellow, and vanadium zirconia yellow.

7.  A black pigment composition for heat-shielding coatings as claimed in any one of claims 4 to 6, wherein the fourth pigment is at least one pigment selected from the group consisting of a diketopyrrolopyrrole pigment and a naphthol pigment.

8.  A black pigment composition for heat-shielding coatings as claimed in any one of claims 1 to 7, wherein the composition has a hue within the range of color difference $\Delta E_2$ of 2.0 or less, as calculated by the equation $\Delta E_2 = [(\Delta L_2{}^*)^2 + (\Delta a_2{}^*)^2 + (\Delta b_2{}^*)^2]^{1/2}$, relative to the target hue of $L_2{}^* = 26.80$, $a_2{}^* = 0.22$, $b_2{}^* = 0.42$, in the color space coordinate according the CIE standard.

9.  Use of a black pigment composition for heat-shielding coatings as claimed in any one of claims 1 to 8, for producing a hue when the composition is light-colored, within the range of color difference $\Delta E_1$ of 2.0 or less, as calculated by the equation $\Delta E_1 = [(\Delta L_1{}^*)^2 + (\Delta a_1{}^*)^2 + (\Delta b_1{}^*)^2]^{1/2}$, relative to the target hue of $L_1{}^* = 54.70$, $a_1{}^* = -5.07$, $b_1{}^* = -10.10$, in the color space coordinate according the CIE standard.

10. A heat-shielding black coating comprising, at least, a black pigment composition for heat-shielding coatings according to any one of claims 1 to 8, a binder, and a solvent.

11. A heat-shielding black coating as claimed in claim 10, wherein the coating further comprises a white inorganic pigment.

12. A heat-shielding black coating as claimed in claim 11, wherein the white inorganic pigment is a white pigment selected from the group consisting of titanium oxide, zinc oxide and aluminum oxide.

13. A heat-shielding black coating as claimed in any one of claims 10 to 12, wherein the binder is a resin selected from the group consisting of an acrylic resin, an acrylic-silicone resin, a silicone resin, a fluororesin, a urethane resin, an unsaturated polyester resin and an alkyd resin.

14. Use of a heat-shielding black coating as claimed in claims 10 to 13, for shading chromatic or achromatic coatings.

15. Use of a heat-shielding black coating as claimed in claims 10 to 13, for coating a roof or outer wall of a building.

**Patentansprüche**

1. Schwarze Pigmentzusammensetzung für wärmeabschirmende Beschichtungen, umfassend mindestens ein Phthalocyaninblaupigment als ein erstes Pigment und ein Phthalocyaningrünpigment als ein zweites Pigment und ferner mindestens ein weiteres chromatisches Pigment, die selektiv Licht von 400 nm bis 550 nm absorbieren und eine Durchlässigkeit im Infrarot-Wellenlängenbereich von 40% oder mehr zeigen, wobei in Bezug auf die Menge in Gewichtsteilen des Phthalocyaninblaupigments als Mb, des Phthalocyaningrünpigments als Mg und der Summe des mindestens einen weiteren chromatischen Pigments als Mn

$$1,5 < Mg/Mb < 4,0$$

und

$$2 < Mb < 20$$

$$17 < Mg < 40$$

$$45 < Mn < 63$$

festgesetzt werden.

2. Schwarze Pigmentzusammensetzung für wärmeabschirmende Beschichtungen nach Anspruch 1, wobei mindestens ein Pigment ausgewählt aus der Gruppe bestehend aus C.I. Pigment Blau 15:3, Pigment Blau 15:1, Pigment Blau 15:2, Pigment Blau 15:4 und Pigment Blau 15:6 als Phthalocyaninblaupigment verwendet wird.

3. Schwarze Pigmentzusammensetzung für wärmeabschirmende Beschichtungen nach Anspruch 1 oder 2, wobei C.I. Pigment Grün 7 und/oder C.I. Pigment Grün 36 als das Phthalocyaningrünpigment verwendet werden.

4. Schwarze Pigmentzusammensetzung für wärmeabschirmende Beschichtungen nach einem der Ansprüche 1 bis 3, wobei die Zusammensetzung aus einem Phthalocyaninblaupigment als das erste Pigment, einem Phthalocyaningrünpigment als das zweite Pigment und dritte und vierte Pigmente als das mindestens eine weitere chromatische Pigment besteht.

5. Schwarze Pigmentzusammensetzung für wärmeabschirmende Beschichtungen nach Anspruch 4, wobei das dritte Pigment ein anorganisches gelbes Pigment ist.

**6.** Schwarze Pigmentzusammensetzung für wärmeabschirmende Beschichtungen nach Anspruch 5, wobei das anorganische gelbe Pigment mindestens ein Pigment, ausgewählt aus der Gruppe bestehend aus gelbem Eisenoxid, Zinksulfid, Cadmium-Gelb, Bismutvanadiumgelb, Vanadiumzinngelb und Vanadiumzirkonoxidgelb ist.

**7.** Schwarze Pigmentzusammensetzung für wärmeabschirmende Beschichtungen nach einem der Ansprüche 4 bis 6, wobei das vierte Pigment mindestens ein Pigment, ausgewählt aus der Gruppe bestehend aus einem Diketopyrrolopyrrolpigment und einem Naphtholpigment ist.

**8.** Schwarze Pigmentzusammensetzung für wärmeabschirmende Beschichtungen nach einem der Ansprüche 1 bis 7, wobei die Zusammensetzung einen Farbton innerhalb des Bereichs einer Farbdifferenz $\Delta E_2$ von 2,0 oder weniger, wie durch die Gleichung $\Delta E_2 = [(\Delta L_2{}^*)^2+(\Delta a_2{}^*)^2+(\Delta b_2{}^*)^2]^{1/2}$, bezogen auf den Zielfarbton $L_2{}^* = 26,80$, $a_2{}^* = 0,22$, $b_2{}^* = 0,42$, berechnet, in der Farbraumkoordinate gemäß der CIE-Norm aufweist.

**9.** Verwendung einer schwarzen Pigmentzusammensetzung für wärmeabschirmende Beschichtungen nach einem der Ansprüche 1 bis 8 zur Erzeugung eines Farbtons, wenn die Zusammensetzung hell gefärbt ist, innerhalb des Bereichs der Farbdifferenz $\Delta E_1$ von 2,0 oder weniger, wie durch die Gleichung $\Delta E_1 = [(\Delta L_1{}^*)^2+(\Delta a_1{}^*)^2+(\Delta b_1{}^*)^2]^{1/2}$, bezogen auf den Zielfarbton $L_1{}^* = 54,70$, $a_1{}^* = -5,07$, $b_1{}^* = -10,10$, berechnet, in der Farbraumkoordinate gemäß der CIE-Norm.

**10.** Wärmeabschirmende schwarze Beschichtung, umfassend mindestens eine schwarze Pigmentzusammensetzung für wärmeabschirmende Beschichtungen nach einem der Ansprüche 1 bis 8, ein Bindemittel und ein Lösungsmittel.

**11.** Wärmeabschirmende schwarze Beschichtung nach Anspruch 10, wobei die Beschichtung ferner ein weißes anorganisches Pigment umfasst.

**12.** Wärmeabschirmende schwarze Beschichtung nach Anspruch 11, wobei das anorganische Weißpigment ein weißes Pigment ist, ausgewählt aus der Gruppe bestehend aus Titanoxid, Zinkoxid und Aluminiumoxid.

**13.** Wärmeabschirmende schwarze Beschichtung nach einem der Ansprüche 10 bis 12, wobei das Bindemittel ein Harz ist, ausgewählt aus der Gruppe bestehend aus einem Acrylharz, einem Acrylsilikonharz, einem Silikonharz, einem Fluorharz, einem Urethanharz, einem ungesättigten Polyesterharz und einem Alkydharz.

**14.** Verwendung einer wärmeabschirmenden schwarzen Beschichtung nach den Ansprüchen 10 bis 13, für die Abschirmung chromatischer oder achromatischer Beschichtungen.

**15.** Verwendung einer wärmeabschirmenden schwarzen Beschichtung nach den Ansprüchen 10 bis 13, zur Beschichtung eines Daches oder einer Außenwand eines Gebäudes.

**Revendications**

**1.** Composition de pigments noire pour revêtements de protection thermique, comprenant, au moins, un pigment bleu phtalocyanine en tant que premier pigment, un pigment vert phtalocyanine en tant que deuxième pigment, et comprenant en outre au moins un autre pigment chromatique qui absorbe de manière sélective la lumière de 400 nm à 550 nm, et présente un facteur de transmission dans la région de longueur d'onde infrarouge de 40 % ou plus, dans laquelle, en ce qui concerne les quantités en parties en poids du pigment bleu phtalocyanine désigné Mb, du pigment vert phtalocyanine désigné Mg et du total de l'au moins un autre pigment chromatique désigné Mn,

$$1,5 < Mg/Mb < 4,0$$

et

$$2 < Mb < 20$$

$$17 < Mg < 40$$

$$45 < Mn < 63,$$

sont établies.

**2.** Composition de pigments noire pour des revêtements de protection thermique selon la revendication 1, dans laquelle au moins un pigment choisi dans le groupe constitué par les CI pigment bleu 15:3, pigment bleu 15:1, pigment bleu 15:2, pigment bleu 15:4 et pigment bleu 15:6 est utilisé en tant que pigment bleu phtalocyanine.

**3.** Composition de pigments noire pour des revêtements de protection thermique selon la revendication 1 ou 2, dans laquelle le CI pigment vert 7 et/ou le CI pigment vert 36 sont utilisés en tant que pigment vert phtalocyanine.

**4.** Composition de pigments noire pour des revêtements de protection thermique selon l'une quelconque des revendications 1 à 3, la composition étant constituée d'un pigment bleu phtalocyanine en tant que premier pigment, d'un pigment vert phtalocyanine en tant que deuxième pigment et de troisième et quatrième pigments en tant que l'au moins un autre pigment chromatique.

**5.** Composition de pigments noire pour des revêtements de protection thermique selon la revendication 4, dans laquelle le troisième pigment est un pigment jaune inorganique.

**6.** Composition de pigments noire pour des revêtements de protection thermique selon la revendication 5, dans laquelle le pigment jaune inorganique en est au moins un choisi dans le groupe constitué par l'oxyde de fer jaune, le sulfure de zinc, le jaune de cadmium, le jaune de bismuth et de vanadium, le jaune de vanadium et d'étain et le jaune de vanadium et de zircone.

**7.** Composition de pigments noire pour des revêtements de protection thermique selon l'une quelconque des revendications 4 à 6, dans laquelle le quatrième pigment en est au moins un choisi dans le groupe constitué par un pigment dicétopyrrolopyrrole et un pigment naphtol.

**8.** Composition de pigments noire pour revêtements de protection thermique selon l'une quelconque des revendications 1 à 7, la composition présentant une tonalité chromatique dans la plage de différence de couleur $\Delta E_2$ de 2,0 ou moins, calculée par l'équation $\Delta E_2 = [(\Delta L_2{}^*)^2 + (\Delta a_2{}^*)^2 + (\Delta b_2{}^*)^2]^{1/2}$, par rapport à la tonalité chromatique cible de $L_2{}^* = 26,80$, $a_2{}^* = 0,22$, $b_2{}^* = 0,42$, en coordonnées de l'espace colorimétrique conforme à la norme CIE.

**9.** Utilisation d'une composition de pigments noire pour revêtements de protection thermique selon l'une quelconque des revendications 1 à 8, pour la production d'une tonalité chromatique, lorsque la composition est de couleur claire, dans la plage de différence de couleur $\Delta E_1$ de 2,0 ou moins, calculée par l'équation $\Delta E_1 = [(\Delta L_1{}^*)^2 + (\Delta a_1{}^*)^2 + (\Delta b_1{}^*)^2]^{1/2}$, par rapport à la tonalité chromatique cible de $L_1{}^* = 54,70$, $a_1{}^* = -5,07$, $b_1{}^* = -10,10$, en coordonnées de l'espace colorimétrique conforme à la norme CIE.

**10.** Revêtement noir de protection thermique, comprenant au moins une composition de pigments noire pour des revêtements de protection thermique selon l'une quelconque des revendications 1 à 8, un liant et un solvant.

**11.** Revêtement noir de protection thermique selon la revendication 10, le revêtement comprenant en outre un pigment inorganique blanc.

**12.** Revêtement noir de protection thermique selon la revendication 11, dans lequel le pigment inorganique blanc est un pigment blanc choisi dans le groupe constitué par l'oxyde de titane, l'oxyde de zinc et l'oxyde d'aluminium.

**13.** Revêtement noir de protection thermique selon l'une quelconque des revendications 10 à 12, dans lequel le liant est une résine choisie dans le groupe constitué par une résine acrylique, une résine acrylique-silicone, une résine de silicone, une résine fluorée, une résine d'uréthane, une résine de polyester insaturé et une résine alkyde.

**14.** Utilisation d'un revêtement noir de protection thermique selon les revendications 10 à 13, pour le nuançage de revêtements chromatiques ou achromatiques.

15. Utilisation d'un revêtement noir de protection thermique selon les revendications 10 à 13, pour le revêtement d'un toit ou d'un mur extérieur d'un bâtiment.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000072990 A
- JP 2012243477 A
- WO 2014067613 A
- WO 20057758 A